# EUROPEAN PATENT SPECIFICATION

(11) **EP 3 410 302 B1**
(45) Date of publication and mention of the grant of the patent: **09.08.2023**
(21) Application number: 17743733.2
(22) Date of filing: 25.01.2017
(51) Int. Cl.: G06F 9/54, A63F 13/355, H04N 19/48, H04N 19/137

(54) **GRAPHIC INSTRUCTION DATA PROCESSING METHOD, APPARATUS**
DATENVERARBEITUNGSVERFAHREN UND -VORRICHTUNG FÜR GRAFISCHE ANWEISUNGEN
PROCÉDÉ ET APPAREIL DE TRAITEMENT DE DONNÉES D'INSTRUCTION GRAPHIQUE

(30) Priority: 29.01.2016 CN 201610067797
(43) Date of publication of application: 05.12.2018
(73) Proprietor: Tencent Technology (Shenzhen) Company Limited, Shenzhen, Guangdong, 518057 (CN)
(72) Inventor: DU, Xingge, Shenzhen, Guangdong 518057 (CN); NIE, Zhiming, Shenzhen, Guangdong 518057 (CN); LI, Congbing, Shenzhen, Guangdong 518057 (CN); AI, Feng, Shenzhen, Guangdong 518057 (CN); GU, Yu, Shenzhen, Guangdong 518057 (CN); WANG, Yangjun, Shenzhen, Guangdong 518057 (CN); CAO, Wensheng, Shenzhen, Guangdong 518057 (CN); YE, Jinfeng, Shenzhen, Guangdong 518057 (CN); WANG, Weiguang, Shenzhen, Guangdong 518057 (CN); HAN, Xiang, Shenzhen, Guangdong 518057 (CN); CHENG, Dongzhe, Shenzhen, Guangdong 518057 (CN); CHEN, Guole, Shenzhen, Guangdong 518057 (CN); ZHOU, Henan, Shenzhen, Guangdong 518057 (CN); ZHUANG, Zhiwei, Shenzhen, Guangdong 518057 (CN); SHEN, Chao, Shenzhen, Guangdong 518057 (CN)
(74) Representative: Eisenführ Speiser
(86) International application number: PCT/CN2017/072538
(87) International publication number: WO 2017/129118

(56) References cited:
- CN-A- 101 031 085
- CN-A- 102 566 910
- CN-A- 103 440 612
- CN-A- 105 760 238
- US-A1- 2002 080 881
- US-A1- 2004 151 390
- US-A1- 2013 083 161
- US-A1- 2013 128 988

## Description

### FIELD OF THE TECHNOLOGY

The present disclosure relates to the field of cloud technologies, and specifically to a method, an apparatus and a system for processing graphical instruction data.

### BACKGROUND OF THE DISCLOSURE

As terminal technologies and network bandwidth develop rapidly and cloud computing technologies are increasingly mature in recent years, a cloud interactive system emerges. An existing cloud interactive system generally includes a server and multiple user equipments. The server may be a cluster server. Multiple interactive applications may all be run in the cloud interactive system.

During running of an interactive application such as a cloud game, the server may need to interact with the user equipment for a graphical interface. Graphical instruction data of the graphical interface is transmitted in frames.

During actual interaction, a quantity of transmitted graphical instruction data is relatively large, and a requirement on bandwidth in network transmission is very high. Consequently, it is easy to cause a phenomenon such as an intermittent stop of an interface or unsmooth playback on a user equipment end. US 2013/0083161 A1 discloses a method for encoding video for streaming which includes receiving a plurality of sequential image frames generated by a 3D graphics rendering engine. Graphics rendering contexts are obtained, including pixel depth map, rendering camera parameters, and camera motion from the 3D rendering engine. The method next entails selecting key frames among the plurality of sequential image frames, interpolating non-key frames via 3D image warping, and encoding all key frames and warping residues of non-key frames. The system is implementable on a server linked to a mobile user device for receiving the encoded frame data. The mobile user device is configured to decode the encoded frame data and display a corresponding image to a user of the mobile user device.
US 2013/0128988 A1 discloses systems and methods for reconstructing sequences of video frames received from a sending device in a distributed video coding environment. Some of the video frames are received as key video frames fully encoded at the sending device. Others are received as non-key video frames partitioned into pixel blocks. Some of the pixel blocks are indicated for reconstruction via a corresponding previous pixel block of a previous video frame, while other pixel blocks are to be reconstructed by decoding encodings of those pixel blocks received from the sending device. Each received encoding of a pixel block is based on contents of the non-key video frame that contains the pixel block and not on contents of the previous key video frame, nor on contents of any other video frame positioned between the previous key video frame and the non-key video frame in the sequence of video frames.

### SUMMARY

Embodiments of the present disclosure provide a method, an apparatus and a system for processing graphical instruction data, to help reduce a quantity of transmitted graphical instruction data, and lower a requirement on bandwidth.

A method for processing graphical instruction data of a graphical interface for interaction with a user is provided according to a first aspect of the present disclosure. The graphical user interface is to be generated by a graphical rendering application programming interface, API, on a user equipment based on the graphical instruction data. The method is applied to a cloud interactive system. The cloud interactive system includes a server and the user equipment. The graphical instruction data is sent from the server to the user equipment in frames. The method includes: obtaining, by the server, graphical instruction data of a frame; determining whether the frame meets a key frame setting condition; comparing the graphical instruction data of the frame with graphical instruction data of a current key frame to obtain differential data, in a case that the frame does not meet the key frame setting condition; and sending the differential data to the user equipment, where the user equipment obtains the graphical instruction data of the frame based on the current key frame and the differential data, wherein the graphical instruction data is data that is generated, by the server, by capturing a drawing operation for the graphical user interface of each frame, recording a rendering instruction for graphical drawing, and generating the graphical instruction data of the frame.

A method for processing graphical instruction data of a graphical interface for interaction with a user is provided according to a second aspect of the present disclosure. The graphical user interface is to be generated by a graphical rendering application programming interface, API, on a user equipment based on the graphical instruction data. The method is applied to a cloud interactive system. The cloud interactive system includes a server and the user equipment. The graphical instruction data is sent from the server to the user equipment in frames. The method includes: receiving, by the user equipment, data of a frame that is sent by the server; identifying whether the frame is a key frame; obtaining a current key frame and determining that the data of the frame is differential data between the frame and the current key frame, in a case that the frame is not the key frame; and obtaining graphical instruction data of the frame based on the data of the frame and the current key frame, wherein the graphical instruction data is data that is generated, by the server, by capturing a drawing operation for the graphical user interface of each frame, recording a rendering instruction for graphical drawing, and generating the graphical instruction data of the frame.

An apparatus for processing graphical instruction data of a graphical interface for interaction with a user is provided according to a third aspect of the present disclosure. The graphical user interface is to be generated by a graphical rendering application programming interface, API, on a user equipment based on the graphical instruction data. The apparatus is applied to a server of a cloud interactive system. The cloud interactive system includes the server and the user equipment. The graphical instruction data is sent from the server to the user equipment in frames. The apparatus includes: an obtaining module, configured to obtain graphical instruction data of a frame; a determining module, configured to determine whether the frame meets a key frame setting condition; a comparison module, configured to compare the graphical instruction data of the frame with graphical instruction data of a current key frame to obtain differential data, in a case that the frame does not meet the key frame setting condition; and a sending module, configured to send the differential data to the user equipment, wherein the user equipment obtains the graphical instruction data of the frame based on the current key frame and the differential data, wherein the graphical instruction data is data that is generated, by the server, by capturing a drawing operation for the graphical user interface of each frame, recording a rendering instruction for graphical drawing, and generating the graphical instruction data of the frame.

An apparatus for processing graphical instruction data of a graphical interface for interaction with a user is provided according to a fourth aspect of the present disclosure. The graphical user interface is to be generated by a graphical rendering application programming interface, API, on a user equipment based on the graphical instruction data. The apparatus is applied to the user equipment of a cloud interactive system. The cloud interactive system includes a server and the user equipment. The graphical instruction data is sent from the server to the user equipment in frames. The apparatus includes a receiving module, an identification module, a determining module and a restoration module. The receiving module is configured to receive data of a frame that is sent by the server. The identification module is configured to identify whether the frame is a key frame. The determining module is configured to obtain a current key frame and determine that the data of the frame is differential data between the frame and the current key frame in a case that the identification module determines that the frame is not the key frame. The restoration module is configured to obtain graphical instruction data of the frame based on the data of the frame and the current key frame, wherein the graphical instruction data is data that is generated, by the server, by capturing a drawing operation for the graphical user interface of each frame, recording a rendering instruction for graphical drawing, and generating the graphical instruction data of the frame.

As can be learned from the above, in some feasible implementations of the present disclosure, differential data between graphical instruction data of a frame and graphical instruction data of a current key frame is obtained, and the differential data is used as to-be-sent data of the frame. Because a size of the differential data is far less than that of original graphical instruction data, a quantity of transmitted data can be effectively reduced, and a requirement on bandwidth can be lowered, thereby helping implement efficient and smooth communication, and ensuring smoothness of graphical interfaces.

### BRIEF DESCRIPTION OF THE DRAWINGS

To describe the technical solutions in the embodiments of the present disclosure more clearly, the following briefly introduces the accompanying drawings required for describing the embodiments and the existing technology. Apparently, the accompanying drawings in the following description show merely some embodiments of the present disclosure, and a person of ordinary skill in the art may still derive other drawings from these accompanying drawings without creative efforts.
FIG. 1 is a flowchart of interaction between a Trace end and a Retrace end;
FIG. 2 is a schematic diagram of distribution of a quantity of instruction data of each frame of a game;
FIG. 3 is a schematic architectural diagram of a cloud interactive system;
FIG. 4 is a schematic flowchart of a method for processing graphical instruction data according to an embodiment of the present disclosure;
FIG. 5 is a schematic flowchart of creating a key frame policy by a Trace end;
FIG. 6 is a schematic flowchart of processing graphical instruction data by a Trace end and a Retrace end;
FIG. 7 is a schematic diagram of a time sequence of processing graphical instruction according to an embodiment of the present disclosure;
FIG. 8 is a schematic comparison diagram of distribution of a quantity of instruction data of each frame of a game;
FIG. 9 is a schematic structural diagram of an apparatus for processing graphical instruction data according to an embodiment of the present disclosure;
FIG. 10 is a schematic structural diagram of an apparatus for processing graphical instruction data according to another embodiment of the present disclosure;
FIG. 11 is a schematic structural diagram of a server according to an embodiment of the present disclosure; and
FIG. 12 is a schematic structural diagram of a user equipment according to an embodiment of the present disclosure.

### DESCRIPTION OF EMBODIMENTS

To make a person skilled in the art understand the solutions in the present disclosure better, the following clearly and completely describes the technical solutions in the embodiments of the present disclosure with reference to the accompanying drawings in the embodiments of the present disclosure. Apparently, the described embodiments are merely some but not all of the embodiments of the present disclosure. All embodiments obtained by a person of ordinary skill in the art based on the embodiments of the present disclosure without creative efforts shall fall within the protection scope of the present disclosure.

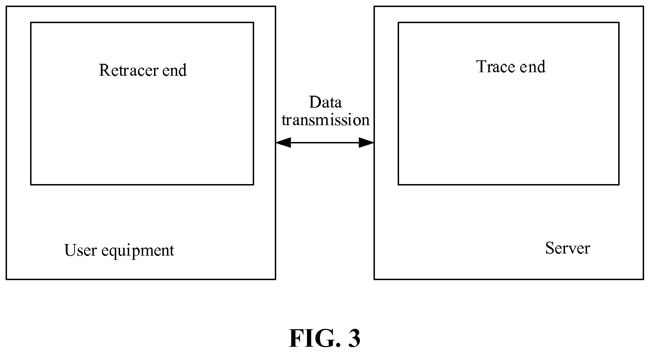

FIG. 3 is a schematic architectural diagram of a cloud interactive system. The cloud interactive system includes a server and a user equipment, and is configured to run an interactive application such as a cloud game. A client of the server and a client of the user equipment on which the interactive application are run are generally referred to as a Trace end and a Retrace end, respectively. The cloud game means that: an actual client of the game runs on a cloud server, and an interface of the game is displayed on a machine of a player; and local keyboard and mouse control of the player are remotely redirected to the cloud server to implement control on the game. Using the cloud game as an example, the Trace end is a game client running on a cloud game server, that is, a cloud end of the cloud game, and implements main logic running of the game, and transmits, to the Retrace end by using a network, a graphical interface related to the interaction with a user. The Retrace end is a client running on the user equipment, that is, a user end of the cloud game, and is configured to: present a graphical interface of the game on the Trace end, and transmit, to the Trace end by using the network, an input of the user performed on a device such as a mouse or a keyboard. During running of the interactive application such as the cloud game, the server may need to interact with the user equipment for a graphical interface.

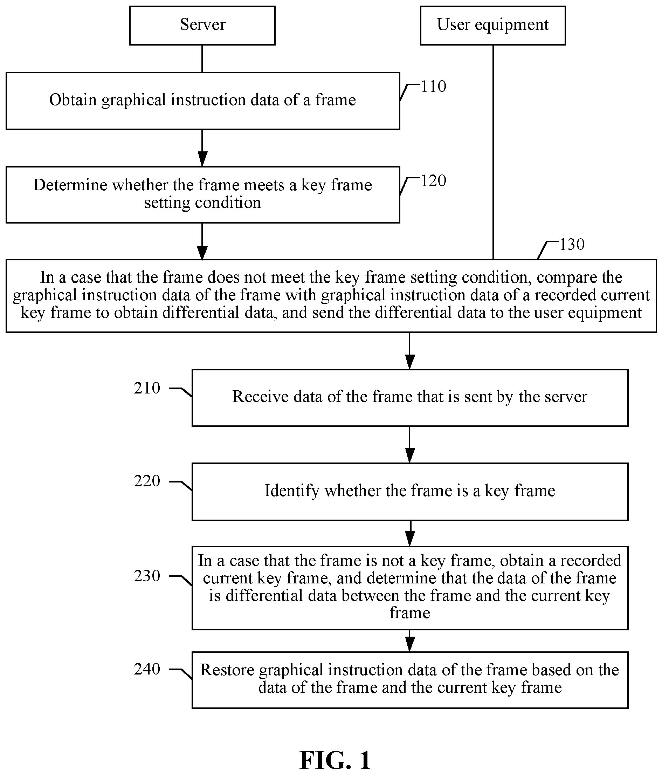

Referring to FIG. 1, FIG. 1 is a flowchart of interaction between a Trace end and a Retrace end. As shown in FIG. 1, a cloud game is run on the Trace end. The Trace end may capture a drawing operation for each graphical interface, record a rendering instruction for the graphical interface, generate graphical instruction data, and send the graphical instruction data to the Retrace end by using a network. The Retrace end receives the instruction data and parses and processes the rendering instruction, invokes a related graphical drawing application programming interface (API) to draw an image, and plays an interface of the cloud game. The graphical instruction data is transmitted in frames.

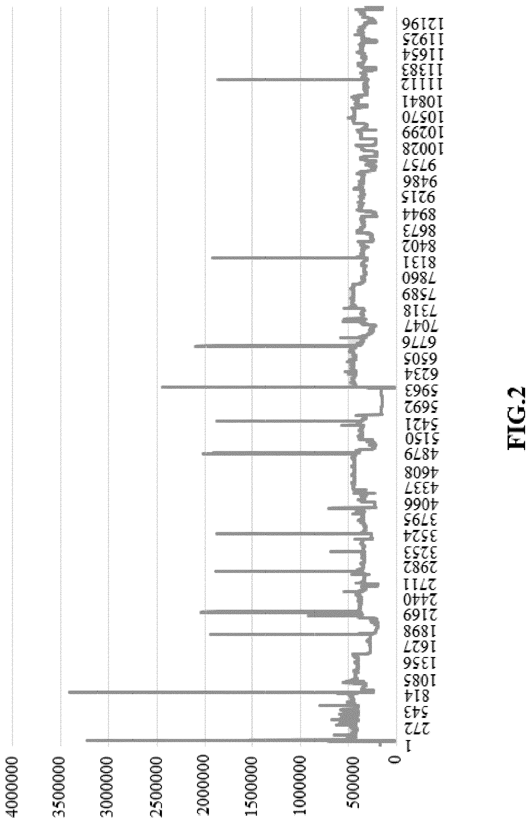

During running of the game, frequency that a graphical rendering API is invoked for an interface of each frame is extremely high, and there are a lot of parameters of a rendering instruction. During recording, these instructions and parameters need to be recorded, and all texture data, vertex data, index data and the like further need to be recorded. In a diagram of distribution of a quantity of instruction data of each frame of a game shown in FIG. 2, as can be learned, an average value of quantities of data of the frames exceeds 500K bytes, and a peak value of the quantities of data reaches 3400K bytes. The smooth game is rendered at a speed of 60 frames per second, and an average value of a network transmission traffic reaches 30MB/s, and a peak value of the network transmission traffic is greater than 200MB/s.

During running of the cloud game, the Trace end on the server needs to send graphical instruction data of a graphical interface of each frame to the Retrace end on the user equipment, so that the Retrace end generates and plays a graphical interface of the cloud game based on the received graphical instruction data. As can be learned, a quantity of transmitted graphical instruction data is relatively large, and a requirement on bandwidth in network transmission is very high. Consequently, it is easy to cause a phenomenon such as an intermittent stop of an interface or unsmooth playback on the Retrace end. To reduce the quantity of transmitted graphical instruction data, and lower the requirement on bandwidth, embodiments of the present disclosure provide a method, an apparatus and a system for processing graphical instruction data.

Detailed descriptions are provided below by using specific embodiments.

### Embodiment 1

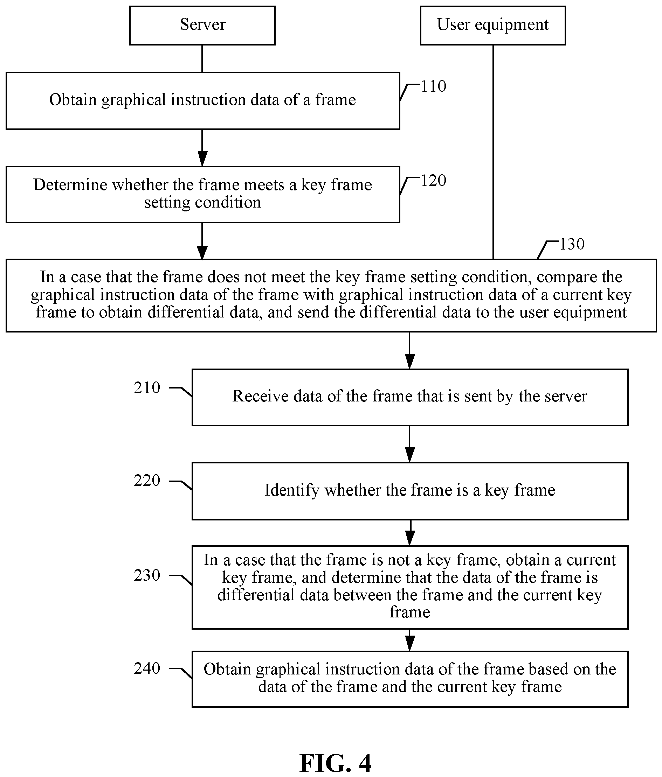

Referring to FIG. 4, a method for processing graphical instruction data is provided according to this embodiment of the present disclosure. The method is applied to a cloud interactive system shown in FIG. 3. The cloud interactive system includes a server and a user equipment. The cloud interactive system is configured to run an interactive application such as a cloud game. In this specification, the cloud game is used as an example for description. The cloud interactive system may be understood as a cloud game system.

On a server side, the method may include step 5110 to step S130.

In step S110, the server obtains graphical instruction data of a frame.

During running of the cloud game, usually, the server is responsible for image drawing, and after completing drawing, sends a drawn image frame to the user equipment. After receiving the drawn image frame, the user equipment decodes the image frame, and then displays an interface of an image. The Trace end may capture a drawing operation for a graphical interface of each frame, and record a rendering instruction for graphical drawing, generate graphical instruction data, and place the graphical instruction data into a processing queue. When data of a frame needs to be sent, graphical instruction data of the frame can be obtained from the processing queue.

In step S120, it is determined whether the frame meets a key frame setting condition.

In this embodiment of the present disclosure, a key frame policy is pre-created, and it is determined, according to the key frame policy, whether the frame meets the key frame setting condition, to determine whether to update a current key frame. Optionally, if the frame is the first frame, the frame may be directly recorded as the current key frame. If the frame is not the first frame, a difference between the frame and a recorded current key frame may be calculated, and it is determined, based on whether the difference is out of a threshold range, whether the frame meets the key frame setting condition.

The difference may be a ratio of a size of the graphical instruction data of the frame to a size of graphical instruction data of the recorded current key frame. Specifically, in a case that the difference is out of the threshold range, it is considered that the difference between the two frames is relatively large, and it is determined that the frame meets the key frame setting condition. In a case that the difference is within the threshold range, it is considered that the difference between the two frames is relatively small, and it is determined that the frame does not meet the key frame setting condition. For example, the threshold range may be set to (0.3, 2.0).

In step S130, in a case that the frame does not meet the key frame setting condition, the graphical instruction data of the frame is compared with graphical instruction data of a current key frame to obtain differential data, and the differential data is sent to the user equipment.

In a case that it is determined in step S120 that the frame does not meet the key frame setting condition, the current key frame is not updated, the differential data between the frame and the recorded current key frame is obtained by using the recorded current key frame, and only the differential data is sent to the user equipment without a need of sending all data of the frame.

In an implementation, the differential data may be further compressed, and the compressed differential data is sent to the user equipment.

Further, the method may further include the following case.

In a case that it is determined in step S120 that the frame meets the key frame setting condition, the key frame is updated, the frame is recorded as a current key frame, and the graphical instruction data of the frame is sent to the user equipment, so that the user equipment generates a graphical interface of the frame.

In a case that it is determined in step S120 that the frame meets the key frame setting condition, it indicates that the difference between the two frames is relatively large. If an originally recorded current key frame is still used, obtained differential data is also relatively large. Consequently, an effect of reducing transmitted traffic cannot be well achieved. Therefore, the key frame needs to be updated, and the recorded current key frame is replaced with the frame. In addition, the differential data is not calculated for the frame, the graphical instruction data of the frame is directly sent to the user equipment. Optionally, the graphical instruction data of the frame may be compressed and then sent to the user equipment. Optionally, the server may insert a special identifier to the data of the frame. The special identifier is used to indicate that the frame is a key frame, to facilitate identification by the user equipment.

When the data is compressed, a DEFLATE compression algorithm of zlib may be used. Certainly, another compression algorithm may be used, which is not limited in this specification.

On a user equipment side, the method may include the following step S210 to step S240.

In step S210, the user equipment receives data of a frame that is sent by the server.

The server sends data to the user equipment in frames, and the user equipment receives the data in frames. If the received data is compressed data, the user equipment decompresses the received compressed data of the frame.

In step S220, it is identified whether the frame is a key frame.

The user equipment first needs to identify the data of the frame, to determine whether the frame is a key frame. In some embodiments, a special identifier in the data of the frame may be identified, to determine whether the frame is the key frame.

In step S230, in a case that the frame is not the key frame, a recorded current key frame is obtained, and it is determined that the data of the frame is differential data between the frame and the current key frame. Optionally, in a case that it is identified in step S220 that the frame is the key frame, it is determined that the data of the frame is the graphical instruction data of the frame, and the key frame is updated, and the frame is recorded as the current key frame.

The data of the frame that is received by the user equipment may be original graphical instruction data, or may be differential data between original graphical instruction data and the recorded current key frame. In a case that the frame is a key frame, the data of the frame that is received by the user equipment is the original graphical instruction data, and the user equipment needs to update the key frame, and update a current key frame recorded locally with the frame. In a case that the frame is not a key frame, the received data is the differential data.

In step S240, graphical instruction data of the frame is obtained based on the data of the frame and the current key frame.

If the differential data is received, the user equipment may obtain the original graphical instruction data of the frame by using the current key frame and the differential data.

After the graphical instruction data of the frame is obtained, further, the method may further include: processing the graphical instruction data of the frame, to generate a graphical interface of the frame.

As can be learned from the above, in some feasible implementations of the present disclosure, during running of a cloud game, differential data between graphical instruction data of a frame and graphical instruction data of a current key frame may be obtained, and the differential data may be used as to-be-sent data of the frame. Because a size of the differential data is far less than that of original graphical instruction data, a quantity of transmitted data of a frame can be effectively reduced, and a requirement on bandwidth can be lowered, thereby helping implement efficient and smooth communication between a Trace end and a Retrace end, and ensuring smoothness of graphical interfaces.

For ease of better understanding the technical solutions provided in the embodiments of the present disclosure, descriptions are provided by using an implementation in a specific scenario as an example below.

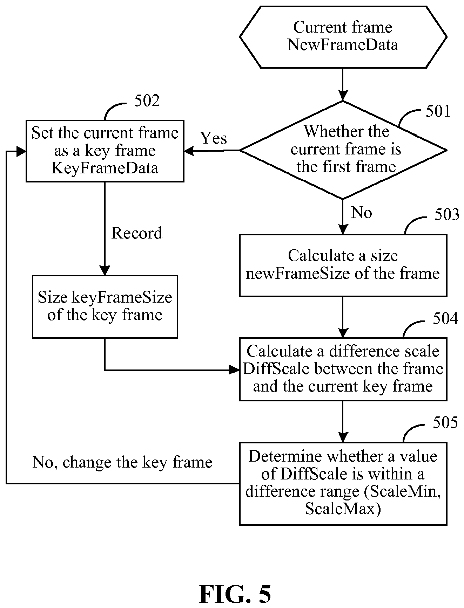

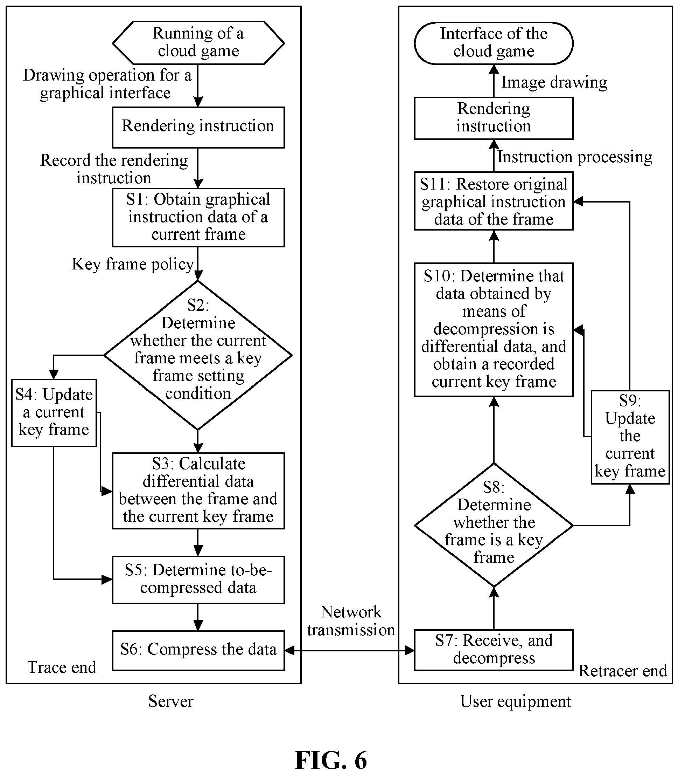

Referring to FIG. 5 and FIG. 6, FIG. 5 and FIG. 6 show a method for processing graphical instruction data according to an embodiment of the present disclosure. The method includes a compression procedure and a decompression procedure, which are respectively applied to a Trace end on a server side and a Retrace end on a user equipment side, and may specifically include following four aspects.

In a first aspect, a key frame policy is pre-created.

In this step, the key frame policy is created, to determine a key frame. When the server sends data of an image frame of a cloud game to the user equipment, it is important to determine to set which frame as a key frame. Because for data of each of subsequent frames, differential data is obtained based on data of the key frame, and obtained differential data is expected to be as small as possible, the key frame needs to be more typical. The key frame policy is used to find a most typical frame as the key frame.

Referring to FIG. 5, a specific process in which the Trace end creates the key frame policy may include step S501 to step S505.

In step S501, it is determined whether a frame NewFrameData is the first frame (or referred to as a start frame).

In step S502, if the frame is the first frame, it is considered that a key frame setting condition is met, the frame may be directly set as a current key frame, and the frame may be recorded as KeyFrameData. Further, a special identifier may be added to data of the frame for identification, and a size keyFrameSize of the current key frame KeyFrameData may be recorded.

In step S503, if the frame is not the first frame, it is calculated a size newFrameSize of original graphical instruction data NewFrameData of the frame.

In step S504, it is calculate a ratio of newFrameSize to a size keyFrameSize of the graphical instruction data of the current key frame, and the ratio is recorded as a difference scale DiffScale, where the ratio indicates a difference between the two frames.

In step S505, a difference range (ScaleMin, ScaleMax) is set; it is determined whether a value of the difference scale DiffScale is within the range; and if the value of the difference scale DiffScale is within the range, it is considered that the frame does not meet the key frame setting condition, and a key frame does not need to be updated; or if a value of the difference scale DiffScale is not within the range, it is considered that the frame meets the key frame setting condition, and a key frame needs to be updated. Therefore, the frame NewFrameData may be recorded as a new current key frame, to replace an original current key frame. Optionally, a relatively good effect can be obtained by setting the difference range (ScaleMin, ScaleMax) to (0.3, 2.0).

In a second aspect, a compression procedure of graphical instruction data is performed.

As shown in FIG. 6, a specific procedure of a method for processing graphical instruction data on the Trace end may include following step S1 to step S6.

In step S1, graphical instruction data of a frame is obtained.

During running of the cloud game, the Trace end captures a drawing operation for a graphical interface of each frame, and record a rendering instruction for graphical drawing, and generate graphical instruction data of the frame.

In step S2, it is determined, according to the foregoing key frame policy, whether the frame meets a key frame setting condition. If the frame does not meet the key frame setting condition, it indicates that a key frame does not need to be updated, and step S3 is performed. If the frame meets the key frame setting condition, it indicates that a key frame needs to be updated by using the frame, and step S4 is performed.

In step S3, differential data between the frame and the current key frame is calculated.

The graphical instruction data of the frame is compared with graphical instruction data of the current key frame to obtain the differential data, and the differential data is recorded. Because differences between data of neighboring several frames are generally relatively small, the differential data is much smaller than original graphical instruction data, so that a quantity of data transmitted by using a network can be greatly reduced.

A difference or an exclusive OR value between data blocks of the frames can be obtained to calculate the differential data between the frame and the current key frame. However, graphical instruction data varies in different frames, and a same piece of graphical instruction data is often offset forward or backward in data blocks of frames. Therefore, to obtain a better effect, in some embodiments of the present disclosure, a data difference comparison algorithm is provided, so that instruction data that is offset forward or backward in the data of the frame can be found.

A procedure of calculating differential data between frames by using the data difference comparison algorithm may include following step a to step c.

In step a, graphical instruction data of the current key frame (current key frame data for short) is considered as a character array KeyFrameData[m] having a length of m, and the graphical instruction data of the frame (frame data for short) is considered as a character string array NewFrameData[n] having a length of n.

In step b, for NewFrameData[n], k is set to a value ranging from 0 to n-1; for each value of k, a segment of data from NewFrameData[k] to NewFrameData[n-1] is extracted; KeyFrameData[m] is traversed to find this segment of data, where inevitably, first t characters are exactly the same, that is, a segment of data from NewFrameData[k] to NewFrameData[k+t] can be found in KeyFrameData[m]; and a largest t is found to serve as an optimal matching length, and a location of the optimal matching length in KeyFrameData is recorded.

In step c, a threshold T having a same length is set, the optimal matching length can be found only when t is greater than the threshold T, and all data of the optimal matching length and offset locations are recorded as the differential data between the frame and the key frame, and data the t corresponding to which is less than the threshold t may be directly copied to the end of the differential data.

In this way, the differential data between the frame and the current key frame is obtained by means of calculation.

It should be noted that, on a receive end, original key frame data NewFrameData may be restored based on data of the optimal matching length in the differential data and an offset location of the data in KeyFrameData.

In step S4, the current key frame is updated.

In a case that the frame meets the key frame setting condition, in this step, the current key frame is updated by using the frame, and the recorded current key frame is replaced by the frame, that is, the frame is recorded as a new current key frame. Further, the Trace end may add a special signal (Flag) identifier to the data of the key frame, to indicate that the frame is the key frame.

In step S5, to-be-compressed data is determined.

In a case that the frame is not a key frame, it is determined that the differential data obtained by means of calculation is the to-be-compressed data.

When the frame is recorded as the new current key frame, it is determined that the frame is the to-be-compressed data.

In step S6, the to-be-compressed data is compressed and then the compressed data is sent.

In this step, the differential data between the frame and the current key frame or the frame itself is compressed, the obtained compressed data is used as to-be-sent data of the frame, and the compressed data is sent to the Retrace end. In some embodiments, the to-be-compressed data may be compressed by using the DEFLATE compression algorithm of zlib or another algorithm, so as to reduce, to the greatest extent, a quantity of data that needs to be transmitted.

In a third aspect, a decompression procedure of the graphical instruction data is performed.

Still referring to FIG. 6, a specific process of a method for processing graphical instruction data on the Retrace end may include step S7 to step S11.

In step S7, the compressed data of the frame that is sent by the Trace end is received, and the compressed data is decompressed.

In step S8, it is determined whether data obtained by decompression is data of the key frame or is the differential data between the frame and the current key frame. It is determined which frame is used as the key frame on the Trace end according to the key frame policy. The data obtained by means of decompression is parsed, to determine whether the data includes the special flag identifier, and it is identified, by determining the identifier, whether the frame is the key frame.

In step S9, if it is determined that the frame is a key frame, the key frame is recorded or updated; and if the current key frame is already recorded, the current key frame is replaced, and the frame is recorded as a new current key frame.

In step S10, if it is determined that the frame is not a key frame, the data obtained by means of decompression is differential data between the frame and the current key frame, and recorded current key frame is obtained.

In step S11, original data of the frame is obtained based on the current key frame and the differential data between the frame and the current key frame, where the original data is original graphical instruction data.

The instruction data is processed, to obtain a drawn graphical interface of the cloud game.

In a fourth aspect, a processing queue of the graphical instruction data is created.

The cloud game has a relatively high requirement on real-time performance. Enough smoothness needs to be ensured in this process, to obtain better experience of the cloud game. For the graphical instruction data, a process of analyzing and compressing differential data between frames is relatively time-consuming. Therefore, the processing queue of the graphical instruction data may be created. After the original graphical instruction data is acquired, the original graphical instruction data is first placed into the processing queue. The original graphical instruction data waits to be performed with a difference analyzing process and a compressing process, and then the compressed data is sent. In this way, it is avoided a problem such as an intermittent stop of a graphical interface that affects an effect of the game.

A main thread of the Trace end is configured to: capture a drawing operation for a graphical interface of each frame, record a rendering instruction for graphical drawing, generate graphical instruction data of the frame, and place the graphical instruction data into the processing queue. Because the process of analyzing and compressing the differential data is time-consuming, when the process of recording a graphical instruction is performed by the main thread, smoothness of the game during recording of a graphical instruction is affected. Preferably, a data difference analysis and compression thread may be created, and data difference analysis, calculation, and compression are processed in the thread. Differential data analysis and compression are processed in an independent thread, so that a running speed of the main thread is not affected. The thread may directly transmit a result of difference analysis and compression to a background network sending thread for sending, or may place the result of difference analysis and compression into a to-be-sent queue, to wait for a background network sending thread to send the result of the difference analysis and compression, so as to obtain better smoothness.

As can be learned from the above, in the main thread, the graphical instruction data is obtained by recording an original rendering instruction and is placed in the processing queue of the graphical instruction data; in the difference analysis and compression thread, the graphical instruction data is extracted from the processing queue, to perform differential data analysis and apply a compression algorithm on the graphical instruction data, and the results are directly sent or are placed into the to-be-sent queue, to wait for the background network sending thread to send the results.

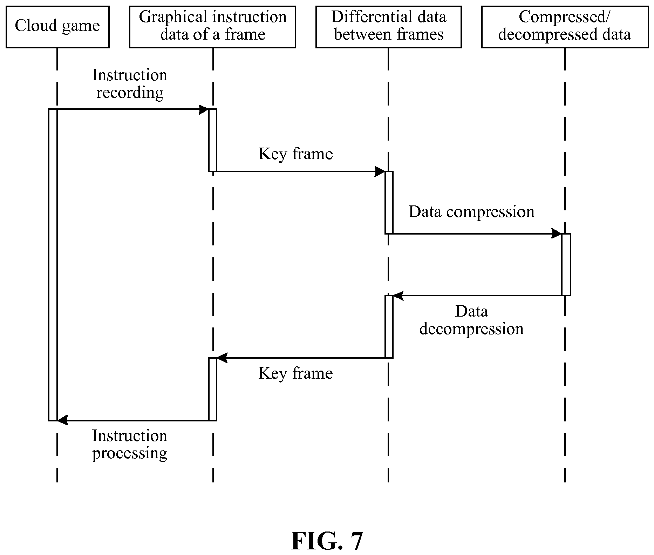

Referring to FIG. 7, FIG. 7 shows a time sequence of processing graphical instruction according to a technical solution in Embodiment 1 of the present disclosure. After the technical solution in this embodiment of the present disclosure is applied, within a running period of a cloud game system, operations are sequentially performed for a cloud game, graphical instruction data of a frame, differential data between frames, and compressed/decompressed data.

As can be learned from the above, according to methods for processing the graphical instruction data provided in the embodiments of the present disclosure, by means of a key frame policy, a size of data can be greatly reduced, traffic transmitted by using a network can be significantly reduced, a requirement on bandwidth can be lowered, a peak value of data traffic can be significantly lowered, and a time of receiving and sending data by the network can be shortened, so that the game is run more stably and better smoothness is obtained.

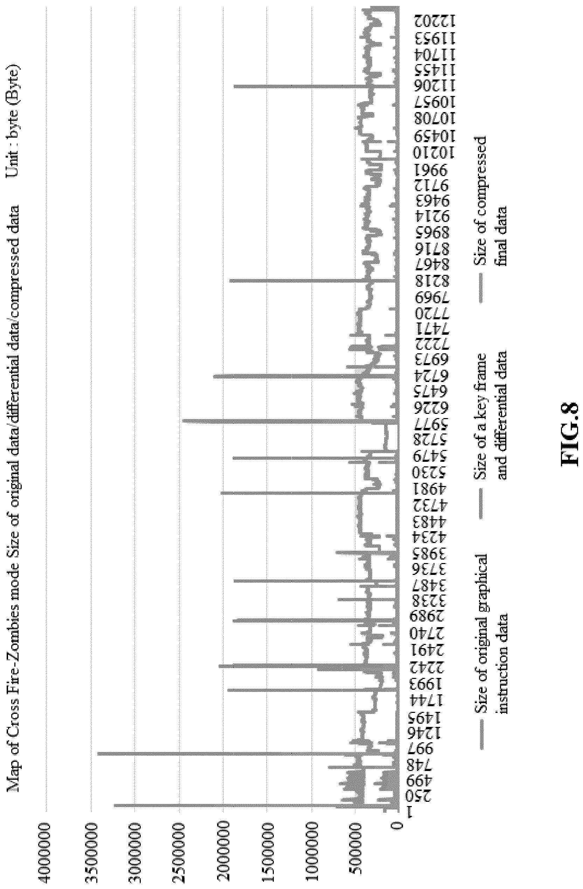

As shown in FIG. 8, using a game as an example, distribution of a size of original graphical instruction data, a size of a key frame and differential data, and a size of compressed data is compared. As can be learned, the differential data is greatly reduced when compared with the original graphical instruction data, and is further reduced after the data is compressed. An average size of data of frames after compression is approximately 12k bytes, and is greatly reduced when compared with 500k bytes or more of the original data.

In addition to being applied to the cloud game, this embodiment of the present disclosure may be further applied to another application in which graphical rendering is performed on a server end, and a rendering instruction is received on a client, for example, a scene roaming program that receives rendering data from the server end, or a virtual reality (VR) device that receives an interface from a cloud server.

To better implement the foregoing solutions in the embodiments of the present disclosure, the following further provides related apparatuses configured to implement the foregoing solutions.

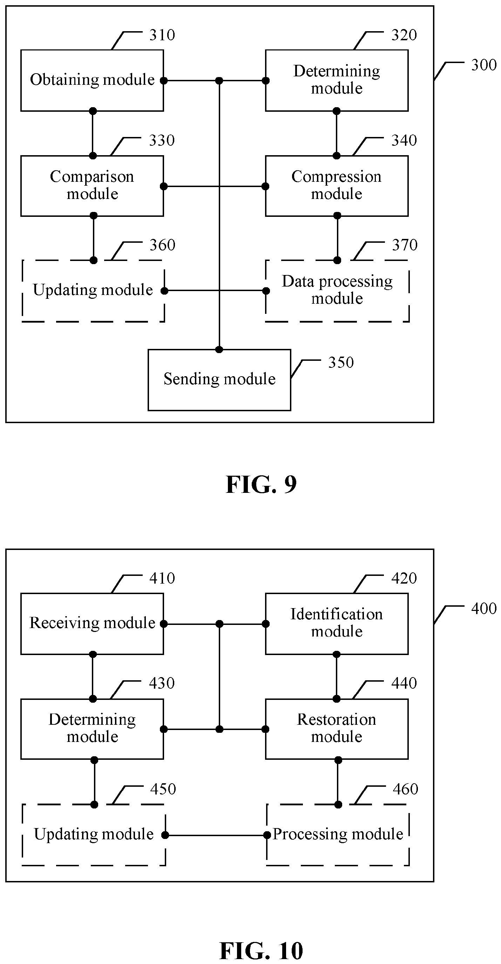

Referring to FIG. 9, an apparatus 300 for processing graphical instruction data is provided according to the disclosure. The apparatus is applied to a server of a cloud interactive system, and the cloud interactive system includes the server and a user equipment. The apparatus 300 includes an obtaining module 310, a determining module 320, a comparison module 330 and a sending module 350.

The obtaining module 310 is configured to obtain graphical instruction data of a frame.

The determining module 320 is configured to determine whether the frame meets a key frame setting condition.

The comparison module 330 is configured to compare the graphical instruction data of the frame with graphical instruction data of a current key frame to obtain differential data in a case that the determining module determines that the frame does not meet the key frame setting condition.

The sending module 350 is configured to send the differential data to the user equipment. The user equipment obtains the graphical instruction data of the frame based on the current key frame and the differential data.

In some embodiments, the apparatus 300 further includes an updating module 360.

The updating module 360 is configured to record the frame as the current key frame in a case that the determining module determines that the frame meets the key frame setting condition.

The sending module 350 is further configured to send the graphical instruction data of the frame to the user equipment.

In some embodiments, the determining module 320 includes a calculation unit and a determining unit.

The calculation unit is configured to calculate a difference between the frame and the current key frame.

The determining unit is configured to determine, based on whether the difference is out of a threshold range, whether the frame meets the key frame setting condition.

In some embodiments, the apparatus 300 further includes a compression module 340.

The compression module 340 is configured to compress the differential data.

The sending module 350 is configured to send the compressed differential data to the user equipment.

In some embodiments, the apparatus 300 further includes a data processing module 370.

The data processing module 370 is configured to: capture a drawing operation for a graphical interface of each frame, generate graphical instruction data, and place the graphical instruction data into a processing queue.

The obtaining module 310 is configured to obtain the graphical instruction data of the frame from the processing queue.

It may be understood that functions of functional modules of the apparatus in this embodiment of the present disclosure may be specifically implemented according to the method in the foregoing method embodiment. For a specific implementation process of the apparatus, refer to a related description in the foregoing method embodiment. Details are not described herein again. The apparatus in this embodiment of the present disclosure may be a server.

As can be learned from the above, in some feasible implementations of the present disclosure, differential data between graphical instruction data of a frame and graphical instruction data of a current key frame is obtained and is compressed, and the compressed data is used as to-be-sent data of the frame. Because a size of the differential data is far less than that of original graphical instruction data, a quantity of transmitted data can be effectively reduced, and a requirement on bandwidth can be lowered, thereby helping implement efficient and smooth communication between the server and the user equipment, and ensuring smoothness of graphical interfaces.

Referring to FIG. 10, an apparatus 400 for processing graphical instruction data is provided according to the embodiment of the disclosure. The apparatus is applied to a user equipment of a cloud interactive system, and the cloud interactive system includes a server and the user equipment. The apparatus includes a receiving module 410, an identification module 420, a determining module 430 and a restoration module 440.

The receiving module 410 is configured to receive data of a frame that is sent by the server.

The identification module 420 is configured to identify whether the frame is a key frame.

The determining module 430 is configured to obtain a current key frame and determine that the data of the frame is differential data between the frame and the current key frame in a case that the identification module determines that the frame is not the key frame.

The restoration module 440 is configured to obtain graphical instruction data of the frame based on the data of the frame and the current key frame.

In some embodiments, the apparatus 400 further includes an updating module 450.

The updating module 450 is configured to determine that the data of the frame is the graphical instruction data of the frame and record the frame as the current key frame in a case that the identification module determines that the frame is the key frame.

In some embodiments, the apparatus 400 further includes a processing module 460.

The processing module 460 is configured to process the graphical instruction data of the frame, to generate a graphical interface of the frame.

In some embodiments, the data of the frame is compressed data, and the receiving module is further configured to decompress the compressed data.

It may be understood that functions of functional modules of the apparatus in this embodiment of the present disclosure may be specifically implemented according to the method in the foregoing method embodiment. For a specific implementation process of the apparatus, refer to a related description in the foregoing method embodiment. Details are not described herein again. The apparatus in this embodiment of the present disclosure may be a user equipment.

As can be learned from the above, in some feasible implementations of the present disclosure, differential data between graphical instruction data of a frame and graphical instruction data of a current key frame is obtained, and the differential data is used as to-be-sent data of the frame. Because a size of the differential data is far less than that of original graphical instruction data, a quantity of transmitted data can be effectively reduced, and a requirement on bandwidth can be lowered, thereby helping implement efficient and smooth communication between the server and the user equipment, and ensuring smoothness of graphical interfaces.

A cloud interactive system is provided according to an embodiment of the present disclosure. As shown in FIG. 3, the cloud interactive system includes a server and a user equipment.

The server is configured to: obtain graphical instruction data of a frame; determine whether the frame meets a key frame setting condition; compare the graphical instruction data of the frame with graphical instruction data of a current key frame to obtain differential data, in a case that the frame does not meet the key frame setting condition; and send the differential data to a user equipment.

The user equipment is configured to: receive the data of the frame that is sent by the server; identify whether the frame is a key frame; obtain the current key frame and determine that the data of the frame is the differential data between the frame and the current key frame, in a case that the frame is not the key frame; and obtain the graphical instruction data of the frame based on the differential data and the key frame.

In some embodiments, the server is further configured to: record the frame as the current key frame and send the graphical instruction data of the frame to the user equipment in a case that the server determines that the frame does not meet the key frame setting condition; and the user equipment is further configured to record the frame as the current key frame in a case that the user equipment identifies that the frame is the current key frame.

As can be learned from the above, in some feasible implementations of the present disclosure, data transmitted between a server and a user equipment may be not all original graphical instruction data, and is replaced by differential data between a frame and a key frame. Therefore, a quantity of transmitted data can be effectively reduced, and a requirement on bandwidth can be lowered, thereby helping implement efficient and smooth communication between the server and the user equipment, and ensuring smoothness of graphical interfaces.

A computer readable storage medium storing one or more programs is provided according to an embodiment of the present disclosure. When being executed by a server including one or more processors, the one or more programs cause the server to perform step 110 to step 130 in the method for processing graphical instruction data in the foregoing method embodiment.

Another computer readable storage medium storing one or more programs is provided according to an embodiment of the present disclosure. When being executed by a user equipment including one or more processors, the one or more programs cause the server to perform step 210 to step 240 in the method for processing graphical instruction data in the foregoing method embodiment.

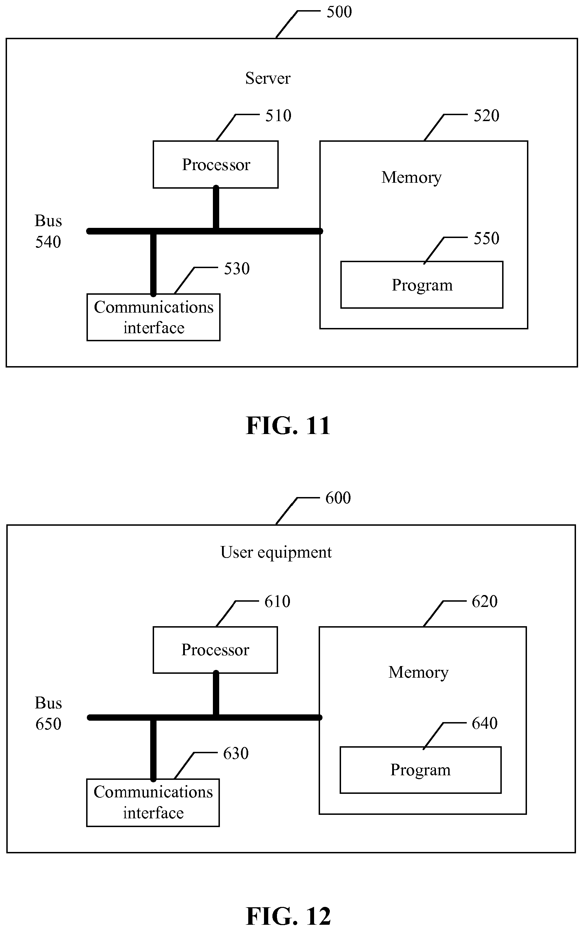

Referring to FIG. 11, a server 500 is provided according to an embodiment of the present disclosure. The server 500 may include: a processor 510, a memory 520, a communications interface 530, and a bus 540. The processor 510, the memory 520, and the communications interface 530 communicate with each other by using the bus 540. The communications interface 530 is configured to receive and send data. The memory 520 is configured to store a program 550. The processor 510 is configured to execute the program in the memory. When the server 500 runs, the processor 510 executes the program 550 stored in the memory 520, so that the server 500 performs step 110 to step 130 in the method for processing graphical instruction data in the foregoing method embodiment.

Referring to FIG. 12, a user equipment 600 is provided according to an embodiment of the present disclosure. The user equipment 600 may include: a processor 610, a memory 620, a communications interface 630, and a bus 640. The processor 610, the memory 620, and the communications interface 630 communicate with each other by using the bus 640. The communications interface 630 is configured to receive and send data. The memory 620 is configured to store a program 650. The processor 610 is configured to execute the program 650 in the memory. When the user equipment 600 runs, the processor 610 executes the program 650 stored in the memory 620, so that the user equipment 600 performs step 210 to step 240 in the method for processing graphical instruction data in the foregoing method embodiment.

The processor 610 may be configured to: obtain graphical instruction data of a frame; determine whether the frame meets a key frame setting condition; and compare the graphical instruction data of the frame with graphical instruction data of a current key frame to obtain differential data, in a case that the frame does not meet the key frame setting condition.

The communications interface 630 may be configured to send the differential data to the user equipment, so that the user equipment obtains the graphical instruction data of the frame based on the current key frame and the differential data.

The bus may be an industry standard architecture (ISA) bus, a peripheral component interconnect (PCI) bus, an extended industry standard architecture (EISA) bus, or the like. The bus may be classified into one or more of an address bus, a data bus, or a control bus. For ease of representation, only one bold line is used to represent the bus in the figure, but this does not mean that there is only one bus or only one type of bus.

The memory may include a high-speed random access memory (RAM). Optionally, the memory may further include a non-volatile memory. For example, the memory may include a magnetic disk memory.

The processor may be a central processing unit (CPU), or the processor may be an application-specific integrated circuit (ASIC), or the processor may be one or more integrated circuits configured to implement the embodiments of the present disclosure.

In the foregoing embodiments, the description of each embodiment has respective focuses. For a part that is not described in detail in an embodiment, refer to related descriptions in other embodiments.

It should be noted that, for ease of description, the foregoing method embodiments are described as a series of action combinations. However, a person skilled in the art should understand that the present disclosure is not limited to the described sequence of the actions, because some steps may be performed in another sequence or performed at the same time according to the present disclosure. In addition, a person skilled in the art should also know that all the embodiments described in this specification are preferred embodiments, and the related actions and modules are not necessarily required in the present disclosure.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

## Claims

1. A method for processing graphical instruction data of a graphical interface for interaction with a user, the graphical user interface to be generated by a graphical rendering application programming interface, API, on a user equipment based on the graphical instruction data, the method being applied to a cloud interactive system, the cloud interactive system comprising a server and the user equipment, the graphical instruction data being sent from the server to the user equipment in frames and the method comprising:
obtaining (110), by the server, graphical instruction data of a frame;
determining (120) whether the frame meets a key frame setting condition;
comparing (130) the graphical instruction data of the frame with graphical instruction data of a current key frame to obtain differential data, in a case that the frame does not meet the key frame setting condition; and
sending (130) the differential data to the user equipment, wherein the user equipment obtains the graphical instruction data of the frame based on the current key frame and the differential data,
wherein the graphical instruction data is data that is generated, by the server, by capturing a drawing operation for the graphical user interface of each frame, recording a rendering instruction for graphical drawing, and generating the graphical instruction data of the frame.

2. The method according to claim 1, wherein after the determining whether the frame meets a key frame setting condition, the method further comprises:
recording the frame as the current key frame and sending the graphical instruction data of the frame to the user equipment, in a case that the frame meets the key frame setting condition.

3. The method according to claim 1, wherein the determining whether the frame meets a key frame setting condition comprises:
calculating a difference between the frame and the current key frame; and
determining, based on whether the difference is out of a threshold range, whether the frame meets the key frame setting condition.

4. The method according to claim 1, wherein, after the differential data is obtained, the method further comprises:
compressing the differential data; and
sending the compressed differential data to the user equipment.

5. A method for processing graphical instruction data of a graphical interface for interaction with a user, the graphical user interface to be generated by a graphical rendering application programming interface, API, on a user equipment based on the graphical instruction data, the method being applied to a cloud interactive system, the cloud interactive system comprising a server and the user equipment, the graphical instruction data being sent from the server to the user equipment in frames and the method comprising:
receiving (210), by the user equipment, data of a frame that is sent by the server;
identifying (220) whether the frame is a key frame;
obtaining (230) a current key frame and determining that the data of the frame is differential data between the frame and the current key frame, in a case that the frame is not the key frame; and
obtaining (240) graphical instruction data of the frame based on the data of the frame and the current key frame,
wherein the graphical instruction data is data that is generated, by the server, by capturing a drawing operation for the graphical user interface of each frame, recording a rendering instruction for graphical drawing, and generating the graphical instruction data of the frame.

6. The method according to claim 5, wherein after the identifying whether the frame is a key frame, the method further comprises:
determining that the data of the frame is the graphical instruction data of the frame and recording the frame as the current key frame, in a case that the frame is the key frame.

7. The method according to claim 5, further comprising:
processing the graphical instruction data of the frame, to generate a graphical interface of the frame based on the graphical instruction data of the frame.

8. The method according to claim 5, wherein the data of the frame is compressed data, and the method further comprises:
decompressing the compressed data after receiving the compressed data of the frame that is sent by the server.

9. An apparatus (300) for processing graphical instruction data of a graphical interface for interaction with a user, the graphical user interface to be generated by a graphical rendering application programming interface, API, on a user equipment based on the graphical instruction data, the apparatus being applied to a server of a cloud interactive system, and the cloud interactive system comprising the server and the user equipment, the graphical instruction data being sent from the server to the user equipment in frames and the apparatus comprising:
an obtaining module (310), configured to obtain graphical instruction data of a frame;
a determining module (320), configured to determine whether the frame meets a key frame setting condition;
a comparison module (330), configured to compare the graphical instruction data of the frame with graphical instruction data of a current key frame to obtain differential data in a case that the determining module determines that the frame does not meet the key frame setting condition; and
a sending module (350), configured to send the differential data to the user equipment, wherein the user equipment obtains the graphical instruction data of the frame based on the current key frame and the differential data,
wherein the graphical instruction data is data that is generated, by the server, by capturing a drawing operation for the graphical user interface of each frame, recording a rendering instruction for graphical drawing, and generating the graphical instruction data of the frame.

10. The apparatus (300) according to claim 9, further comprising:
an updating module (360), configured to record the frame as the current key frame in a case that the determining module determines that the frame meets the key frame setting condition, wherein
the sending module (350) is further configured to send the graphical instruction data of the frame to the user equipment.

11. The apparatus (300) according to claim 9, wherein the determining module (320) comprises:
a calculation unit, configured to calculate a difference between the frame and the current key frame; and
a determining unit, configured to determine, based on whether the difference is out of a threshold range, whether the frame meets the key frame setting condition.

12. The apparatus (300) according to claim 9, further comprising:
a compression module (340), configured to compress the differential data, wherein
the sending module (350) is configured to send the compressed differential data to the user equipment.

13. The apparatus (300) according to any one of claims 9 to 12, further comprising:
a data processing module (370), configured to: capture a drawing operation for a graphical interface of each frame, generate graphical instruction data, and place the graphical instruction data into a processing queue, wherein
the obtaining module (310) is configured to obtain the graphical instruction data of the frame from the processing queue.

14. An apparatus (400) for processing graphical instruction data of a graphical interface for interaction with a user, the graphical user interface to be generated by a graphical rendering application programming interface, API, on a user equipment based on the graphical instruction data, the apparatus being applied to the user equipment of a cloud interactive system, and the cloud interactive system comprising a server and the user equipment; the graphical instruction data being sent from the server to the user equipment in frames and the apparatus comprising:
a receiving module (410), configured to receive data of a frame that is sent by the server;
an identification module (420), configured to identify whether the frame is a key frame;
a determining module (430), configured to obtain a current key frame and determine that the data of the frame is differential data between the frame and the current key frame in a case that the identification module determines that the frame is not the key frame; and
a restoration module (440), configured to obtain graphical instruction data of the frame based on the data of the frame and the current key frame,
wherein the graphical instruction data is data that is generated, by the server, by capturing a drawing operation for the graphical user interface of each frame, recording a rendering instruction for graphical drawing, and generating the graphical instruction data of the frame.

## Patentansprüche

1. Verfahren zum Verarbeiten von grafischen Befehlsdaten einer grafischen Schnittstelle zur Interaktion mit einem Benutzer, wobei die grafische Benutzerschnittstelle durch eine grafische Rendering-Anwendungsprogrammierschnittstelle, API, auf einem Benutzergerät basierend auf den grafischen Befehlsdaten zu erzeugen ist, wobei das Verfahren auf ein interaktives Cloud-System angewendet wird, wobei das interaktive Cloud-System einen Server und das Benutzergerät umfasst, wobei die grafischen Befehlsdaten von dem Server an das Benutzergerät in Frames gesendet werden und das Verfahren umfasst:
Erhalten (110), durch den Server, von grafischen Befehlsdaten eines Frames;
Bestimmen (120), ob der Frame eine Schlüsselframe-Setzbedingung erfüllt;
Vergleichen (130) der grafischen Befehlsdaten des Frames mit grafischen Befehlsdaten eines aktuellen Schlüsselframes, um Differenzdaten zu erhalten, falls der Frame die Schlüsselframe-Setzbedingung nicht erfüllt; und
Senden (130) der Differenzdaten an das Benutzergerät, wobei das Benutzergerät die grafischen Befehlsdaten des Frames basierend auf dem aktuellen Schlüsselframe und den Differenzdaten erhält,
wobei die grafischen Befehlsdaten Daten sind, die von dem Server durch Erfassen einer Zeichenoperation für die grafische Benutzerschnittstelle jedes Frames, Aufzeichnen eines Rendering-Befehls für grafisches Zeichnen und Erzeugen der grafischen Befehlsdaten des Frames erzeugt werden.

2. Verfahren nach Anspruch 1, wobei das Verfahren nach dem Bestimmen, ob der Frame eine Schlüsselframe-Setzbedingung erfüllt, des Weiteren umfasst:
Aufzeichnen des Frames als der aktuelle Schlüsselframe und Senden der grafischen Befehlsdaten des Frames an das Benutzergerät, in einem Fall, dass der Frame die Schlüsselframe-Setzbedingung erfüllt.

3. Verfahren nach Anspruch 1, wobei das Bestimmen, ob der Frame eine Schlüsselframe-Setzbedingung erfüllt, umfasst:
Berechnen einer Differenz zwischen dem Frame und dem aktuellen Schlüsselframe; und
Bestimmen, basierend darauf, ob die Differenz außerhalb eines Schwellenwertbereichs liegt, ob der Frame die Schlüsselframe-Setzbedingung erfüllt.

4. Verfahren nach Anspruch 1, wobei das Verfahren, nachdem die Differenzdaten erhalten wurden, des Weiteren umfasst:
Komprimieren der Differenzdaten; und
Senden der komprimierten Differenzdaten an das Benutzergerät.

5. Verfahren zum Verarbeiten von grafischen Befehlsdaten einer grafischen Schnittstelle zur Interaktion mit einem Benutzer, wobei die grafische Benutzerschnittstelle durch eine grafische Rendering-Anwendungsprogrammierschnittstelle, API, auf einem Benutzergerät basierend auf den grafischen Befehlsdaten zu erzeugen ist, wobei das Verfahren auf ein interaktives Cloud-System angewendet wird, wobei das interaktive Cloud-System einen Server und das Benutzergerät umfasst, wobei die grafischen Befehlsdaten von dem Server an das Benutzergerät in Frames gesendet werden und das Verfahren umfasst:
Empfangen (210), durch das Benutzergerät, von Daten eines von dem Server gesendeten Frames;
Identifizieren (220), ob es sich bei dem Frame um einen Schlüsselframe handelt;
Erhalten (230) eines aktuellen Schlüsselframes und Bestimmen, dass die Daten des Frames Differenzdaten zwischen dem Frame und dem aktuellen Schlüsselframe sind, falls es sich bei dem Frame nicht um den Schlüsselframe handelt; und
Erhalten (240) von graphischen Befehlsdaten des Frames basierend auf den Daten des Frames und dem aktuellen Schlüsselframe,
wobei die grafischen Befehlsdaten Daten sind, die von dem Server durch Erfassen einer Zeichenoperation für die grafische Benutzerschnittstelle jedes Frames, Aufzeichnen eines Rendering-Befehls für grafisches Zeichnen und Erzeugen der grafischen Befehlsdaten des Frames erzeugt werden.

6. Verfahren nach Anspruch 5, wobei das Verfahren nach dem Identifizieren, ob der Frame ein Schlüsselframe ist, des Weiteren umfasst:
Bestimmen, dass die Daten des Frames die grafischen Befehlsdaten des Frames sind, und Aufzeichnen des Frames als der aktuelle Schlüsselframe, in einem Fall, dass der Frame der Schlüsselframe ist.

7. Verfahren nach Anspruch 5, des Weiteren umfassend:
Verarbeitung der grafischen Befehlsdaten des Frames, um eine grafische Schnittstelle des Frames basierend auf den grafischen Befehlsdaten des Frames zu erzeugen.

8. Verfahren nach Anspruch 5, wobei die Daten des Frames komprimierte Daten sind und das Verfahren des Weiteren umfasst:
Dekomprimieren der komprimierten Daten nach dem Empfangen der komprimierten Daten des von dem Server gesendeten Frames.

9. Vorrichtung (300) zum Verarbeiten von grafischen Befehlsdaten einer grafischen Schnittstelle zur Interaktion mit einem Benutzer, wobei die grafische Benutzerschnittstelle durch eine grafische Rendering-Anwendungsprogrammierschnittstelle, API, auf einem Benutzergerät basierend auf den grafischen Befehlsdaten zu erzeugen ist, wobei die Vorrichtung auf einen Server eines interaktiven Cloud-Systems angewendet wird und das interaktive Cloud-System den Server und das Benutzergerät umfasst, wobei die grafischen Befehlsdaten von dem Server an das Benutzergerät in Frames gesendet werden und die Vorrichtung umfasst:
ein Erfassungsmodul (310), das so konfiguriert ist, dass es grafische Befehlsdaten eines Frames erfasst;
ein Bestimmungsmodul (320), das so konfiguriert ist, dass es bestimmt, ob der Frame eine Schlüsselframe-Setzbedingung erfüllt;
ein Vergleichsmodul (330), das so konfiguriert ist, dass es die grafischen Befehlsdaten des Frames mit den grafischen Befehlsdaten eines aktuellen Schlüsselframes vergleicht, um Differenzdaten in einem Fall zu erhalten, dass das Bestimmungsmodul bestimmt, dass der Frame die Schlüsselframe-Einstellungsbedingung nicht erfüllt; und
ein Sendemodul (350), das so konfiguriert ist, dass es die Differenzdaten an das Benutzergerät sendet, wobei das Benutzergerät die grafischen Befehlsdaten des Frames basierend auf dem aktuellen Schlüsselframe und den Differenzdaten erhält,
wobei die grafischen Befehlsdaten Daten sind, die, durch den Server, durch Erfassen einer Zeichenoperation für die grafische Benutzerschnittstelle jedes Frames, Aufzeichnen eines Rendering-Befehls für grafisches Zeichnen und Erzeugen der grafischen Befehlsdaten des Frames erzeugt werden.

10. Vorrichtung (300) nach Anspruch 9, des Weiteren umfassend:
ein Aktualisierungsmodul (360), das so konfiguriert ist, dass es den Frame als den aktuellen Schlüsselframe aufzeichnet, in einem Fall, dass das Bestimmungsmodul bestimmt, dass der Frame die Schlüsselframe-Setzbedingung erfüllt, wobei
das Sendemodul (350) des Weiteren so konfiguriert ist, dass es die grafischen Befehlsdaten des Frames an das Benutzergerät sendet.

11. Vorrichtung (300) nach Anspruch 9, wobei das Bestimmungsmodul (320) umfasst:
eine Berechnungseinheit, die so konfiguriert ist, dass sie eine Differenz zwischen dem Frame und dem aktuellen Schlüsselframe berechnet; und
eine Bestimmungseinheit, die so konfiguriert ist, dass sie basierend darauf, ob die Differenz außerhalb eines Schwellenwertbereichs liegt, bestimmt, ob der Frame die Schlüsselframe-Setzbedingung erfüllt.

12. Vorrichtung (300) nach Anspruch 9, des Weiteren umfassend:
ein Kompressionsmodul (340), das so konfiguriert ist, dass es die Differenzdaten komprimiert, wobei
das Sendemodul (350) so konfiguriert ist, dass es die komprimierten Differenzdaten an das Benutzergerät sendet.

13. Vorrichtung (300) nach einem der Ansprüche 9 bis 12, des Weiteren umfassend:
ein Datenverarbeitungsmodul (370), das so konfiguriert ist, dass es: eine Zeichenoperation für eine grafische Schnittstelle jedes Frames erfasst, grafische Befehlsdaten erzeugt und die grafischen Befehlsdaten in eine Verarbeitungswarteschlange stellt, wobei
das Erfassungsmodul (310) so konfiguriert ist, dass es die grafischen Befehlsdaten des Frames aus der Verarbeitungswarteschlange erhält.

14. Vorrichtung (400) zum Verarbeiten von grafischen Befehlsdaten einer grafischen Schnittstelle zur Interaktion mit einem Benutzer, wobei die grafische Benutzerschnittstelle durch eine grafische Rendering-Anwendungsprogrammierschnittstelle, API, auf einem Benutzergerät basierend auf den grafischen Befehlsdaten zu erzeugen ist, wobei die Vorrichtung auf das Benutzergerät eines interaktiven Cloud-Systems angewendet wird und das interaktive Cloud-System einen Server und das Benutzergerät umfasst, wobei die grafischen Befehlsdaten von dem Server an das Benutzergerät in Frames gesendet werden und die Vorrichtung umfasst:
ein Empfangsmodul (410), das so konfiguriert ist, dass es Daten eines von dem Server gesendeten Frames empfängt;
ein Identifikationsmodul (420), das so konfiguriert ist, dass es erkennt, ob es sich bei dem Frame um einen Schlüsselframe handelt;
ein Bestimmungsmodul (430), das so konfiguriert ist, dass es einen aktuellen Schlüsselframe erhält und bestimmt, dass die Daten des Frames Differenzdaten zwischen dem Frame und dem aktuellen Schlüsselframe sind, in einem Fall, dass das Identifikationsmodul bestimmt, dass es sich bei dem Frame nicht um den Schlüsselframe handelt; und
ein Wiederherstellungsmodul (440), das so konfiguriert ist, dass es grafische Befehlsdaten des Frames basierend auf den Daten des Frames und dem aktuellen Schlüsselframe erhält,
wobei die grafischen Befehlsdaten Daten sind, die von dem Server durch Erfassen einer Zeichenoperation für die grafische Benutzerschnittstelle jedes Frames, Aufzeichnen eines Rendering-Befehls für grafisches Zeichnen und Erzeugen der grafischen Befehlsdaten des Frames erzeugt werden.

## Revendications

1. Procédé de traitement de données d'instructions graphiques d'une interface graphique pour une interaction avec un utilisateur, l'interface graphique d'utilisateur devant être générée par une interface de programmation d'application de rendu graphique, API, sur un équipement d'utilisateur sur la base des données d'instructions graphiques, le procédé étant appliqué à un système interactif en nuage, le système interactif en nuage comprenant un serveur et l'équipement d'utilisateur, les données d'instructions graphiques étant envoyées du serveur à l'équipement d'utilisateur dans des trames et le procédé comprenant:
obtenir (110), par le serveur, des données d'instructions graphiques d'une trame;
déterminer (120) si la trame satisfait à une condition d'établissement de trame clé;
comparer (130) les données d'instructions graphiques de la trame avec des données d'instructions graphiques d'une trame clé actuelle pour obtenir des données différentielles, dans un cas où la trame ne satisfait pas à la condition d'établissement de trame clé; et
envoyer (130) les données différentielles à l'équipement d'utilisateur, dans lequel l'équipement d'utilisateur obtient les données d'instruction graphiques de la trame sur la base de la trame clé actuelle et des données différentielles,
dans lequel les données d'instructions graphiques sont des données qui sont générées, par le serveur, en capturant une opération de dessin pour l'interface graphique d'utilisateur de chaque trame, en enregistrant une instruction de rendu pour le dessin graphique et en générant les données d'instructions graphiques de la trame.

2. Procédé selon la revendication 1, dans lequel, après avoir déterminé si la trame satisfait à une condition d'établissement de trame clé, le procédé comprend en outre:
enregistrer la trame en tant que trame clé actuelle et envoyer les données d'instructions graphiques de la trame à l'équipement d'utilisateur, dans un cas où la trame satisfait à la condition d'établissement de trame clé.

3. Procédé selon la revendication 1, dans lequel la détermination si la trame satisfait à une condition d'établissement de trame clé comprend:
calculer une différence entre la trame et la trame clé actuelle; et
déterminer, sur la base du fait que la différence est hors d'une plage de valeur seuil, si la trame satisfait à la condition d'établissement de trame clé.

4. Procédé selon la revendication 1, dans lequel, après avoir obtenu les données différentielles, le procédé comprend en outre:
compresser les données différentielles; et
envoyer les données différentielles compressées à l'équipement d'utilisateur.

5. Procédé de traitement de données d'instructions graphiques d'une interface graphique pour une interaction avec un utilisateur, l'interface graphique d'utilisateur devant être générée par une interface de programmation d'application de rendu graphique, API, sur un équipement d'utilisateur sur la base des données d'instructions graphiques, le procédé étant appliqué à un système interactif en nuage, le système interactif en nuage comprenant un serveur et l'équipement d'utilisateur, les données d'instructions graphiques étant envoyées du serveur à l'équipement d'utilisateur dans des trames et le procédé comprenant:
recevoir (210), par l'équipement d'utilisateur, des données d'une trame qui est envoyée par le serveur;
identifier (220) si la trame est une trame clé;
obtenir (230) une trame clé actuelle et déterminer que les données de la trame sont des données différentielles entre la trame et la trame clé actuelle, dans un cas où la trame n'est pas la trame clé; et
obtenir (240) des données d'instructions graphiques de la trame sur la base des données de la trame et de la trame clé actuelle,
dans lequel les données d'instructions graphiques sont des données qui sont générées, par le serveur, en capturant une opération de dessin pour l'interface graphique d'utilisateur de chaque trame, en enregistrant une instruction de rendu pour le dessin graphique et en générant les données d'instructions graphiques de la trame.

6. Procédé selon la revendication 5, dans lequel, après avoir identifié si la trame est une trame clé, le procédé comprend en outre:
déterminer que les données de la trame sont les données d'instructions graphiques de la trame et enregistrer la trame en tant que trame clé actuelle, dans un cas où la trame est la trame clé.

7. Procédé selon la revendication 5, comprenant en outre:
traiter les données d'instructions graphiques de la trame afin de générer une interface graphique de la trame sur la base des données d'instructions graphiques de la trame.

8. Procédé selon la revendication 5, dans lequel les données de la trame sont des données compressées, et le procédé comprend en outre:
décompresser les données compressées après avoir reçu les données compressées de la trame qui est envoyée par le serveur.

9. Dispositif (300) de traitement de données d'instructions graphiques d'une interface graphique pour une interaction avec un utilisateur, l'interface graphique d'utilisateur devant être générée par une interface de programmation d'application de rendu graphique, API, sur un équipement d'utilisateur sur la base des données d'instructions graphiques, le dispositif étant appliqué à un serveur d'un système interactif en nuage, et le système interactif en nuage comprenant le serveur et l'équipement d'utilisateur, les données d'instructions graphiques étant envoyées du serveur à l'équipement d'utilisateur dans des trames et le dispositif comprenant:
un module d'obtention (310) qui est configuré pour obtenir des données d'instructions graphiques d'une trame;
un module de détermination (320) qui est configuré pour déterminer si la trame satisfait à une condition d'établissement de trame clé;
un module de comparaison (330) qui est configuré pour comparer les données d'instructions graphiques de la trame avec des données d'instructions graphiques d'une trame clé actuelle pour obtenir des données différentielles, dans un cas où le module de détermination détermine que la trame ne satisfait pas à la condition d'établissement de trame clé; et
un module d'envoi (350) qui est configuré pour envoyer les données différentielles à l'équipement d'utilisateur, dans lequel l'équipement d'utilisateur obtient les données d'instructions graphiques de la trame sur la base de la trame clé actuelle et des données différentielles,
dans lequel les données d'instructions graphiques sont des données qui sont générées, par le serveur, en capturant une opération de dessin pour l'interface graphique d'utilisateur de chaque trame, en enregistrant une instruction de rendu pour le dessin graphique et en générant les données d'instructions graphiques de la trame.

10. Dispositif (300) selon la revendication 9, comprenant en outre:
un module de mise à jour (360) qui est configuré pour enregistrer la trame en tant que trame clé actuelle dans un cas où le module de détermination détermine que la trame satisfait à la condition d'établissement de trame clé, dans lequel
le module d'envoi (350) est en outre configuré pour envoyer les données d'instructions graphiques de la trame à l'équipement d'utilisateur.

11. Dispositif (300) selon la revendication 9, dans lequel le module de détermination (320) comprend:
une unité de calcul qui est configurée pour calculer une différence entre la trame et la trame clé actuelle; et
une unité de détermination qui est configurée pour déterminer, sur la base du fait que la différence est hors d'une plage de valeur seuil, si la trame satisfait à la condition d'établissement de trame clé.

12. Dispositif (300) selon la revendication 9, comprenant en outre:
un module de compression (340) qui est configuré pour compresser les données différentielles, dans lequel
le module d'envoi (350) est configuré pour envoyer les données différentielles compressées à l'équipement d'utilisateur.

13. Dispositif (300) selon l'une quelconque des revendications 9 à 12, comprenant en outre:
un module de traitement de données (370) qui est configuré pour: capturer une opération de dessin pour une interface graphique de chaque trame, générer des données d'instructions graphiques, et placer les données d'instructions graphiques dans une file d'attente de traitement, dans lequel
le module d'obtention (310) est configuré pour obtenir les données d'instructions graphiques de la trame à partir de la file d'attente de traitement.

14. Dispositif (400) de traitement de données d'instructions graphiques d'une interface graphique pour une interaction avec un utilisateur, l'interface graphique d'utilisateur devant être générée par une interface de programmation d'application de rendu graphique, API, sur un équipement d'utilisateur sur la base des données d'instructions graphiques, le dispositif étant appliqué à l'équipement d'utilisateur d'un système interactif en nuage, et le système interactif en nuage comprenant un serveur et l'équipement d'utilisateur, les données d'instructions graphiques étant envoyées du serveur à l'équipement d'utilisateur dans des trames et le dispositif comprenant:
un module de réception (410) qui est configuré pour recevoir des données d'une trame qui est envoyée par le serveur;
un module d'identification (420) qui est configuré pour identifier si la trame est une trame clé;
un module de détermination (430) qui est configuré pour obtenir une trame clé actuelle et pour déterminer que les données de la trame sont des données différentielles entre la trame et la trame clé actuelle, dans un cas où le module d'identification détermine que la trame n'est pas la trame clé; et
un module de restauration (440) qui est configuré pour obtenir des données d'instructions graphiques de la trame sur la base des données de la trame et de la trame clé actuelle,
dans lequel les données d'instructions graphiques sont des données qui sont générées, par le serveur, en capturant une opération de dessin pour l'interface graphique d'utilisateur de chaque trame, en enregistrant une instruction de rendu pour le dessin graphique et en générant les données d'instructions graphiques de la trame.
